# FASCICULE DE BREVET EUROPEEN

(11) **EP 3 790 802 B1**
(45) Date de publication et mention de la délivrance du brevet: **01.06.2022**
(21) Numéro de dépôt: 19722664.0
(22) Date de dépôt: 04.04.2019
(51) Int. Cl.: B64D 15/12, B64C 11/00, H01F 38/18

(54) **ENSEMBLE PROPULSIF POUR AERONEF MUNI D'UN TRANSFORMATEUR TOURNANT D'ALIMENTATION DES PALES EN ENERGIE ELECTRIQUE**
FLUGZEUGANTRIEBSANORDNUNG MIT EINEM DREHTRANSFORMATOR ZUR VERSORGUNG DER SCHAUFELN MIT ELEKTRISCHER ENERGIE
AIRCRAFT PROPULSION ASSEMBLY PROVIDED WITH A ROTARY TRANSFORMER FOR SUPPLYING THE BLADES WITH ELECTRICAL ENERGY

(30) Priorité: 07.05.2018 FR 1853921
(43) Date de publication de la demande: 17.03.2021
(73) Titulaire: SAFRAN AIRCRAFT ENGINES, 75015 Paris (FR); Safran Electrical & Power, 31702 Blagnac (FR); Safran Transmission Systems, 92700 Colombes (FR)
(72) Inventeur: SANTIN, Mathieu Jean Jacques, 77550 MOISSY-CRAMAYEL (FR); BECK, Guillaume Julien, 77550 MOISSY-CRAMAYEL (FR); MOREAU DE LIZOREUX, Aldric Renaud Gabriel Marie, 77550 MOISSY-CRAMAYEL (FR); MORELLI, Boris Pierre Marcel, 77550 MOISSY-CRAMAYEL (FR); CHASTAGNIER, Jean-Michel Bernard Paul, 31702 BLAGNAC (FR); TURCHI, Thomas, 31702 BLAGNAC (FR)
(74) Mandataire: Cabinet Beau de Loménie
(86) Numéro de dépôt international: PCT/FR2019/050795
(87) Numéro de publication internationale: WO 2019/215399

(56) Documents cités:
- EP-A1- 2 919 555
- EP-A2- 2 730 506
- WO-A1-2011/064377
- FR-A- 863 490

## Description

### Arrière-plan de l'invention

Sur un turbopropulseur classique, l'hélice est entraînée par une turbine à gaz (turbine libre ou turbine liée) via un réducteur, le réducteur placé entre l'hélice et la turbomachine pouvant être de différents types : à train d'engrenages simples, à train d'engrenages composés, à planétaire, épicycloïdal, etc. De la même façon, sur un hélicoptère classique, le rotor principal qui comporte les pales de l'hélicoptère est également entrainé par une turbine à gaz via un réducteur constitué par une boite de transmission principale (BTP).

L'hélice équipant un tel turbopropulseur, ainsi que le rotor principal d'un hélicoptère, sont généralement équipés d'un système de dégivrage permettant de décoller la glace s'accumulant sur les pales de l'hélice ou du rotor principal. La plupart des systèmes de dégivrage actuels sont des systèmes électriques comportant par exemple des tapis chauffants électriques fixés sur l'intrados et l'extrados de chaque pale, au niveau du bord d'attaque, qui vont, lorsqu'ils sont alimentés en énergie, créer de la chaleur permettant de décoller la glace formée sur la pale, laquelle sera ensuite éjectée par centrifugation. Cette alimentation en énergie des tapis chauffants nécessite une puissance de plusieurs kilowatts délivrée par un réseau alternatif triphasé, les alimentations alternatives monophasées ou continue basse tension étant en effet réservées aux charges de plus faible puissance.

Pour ce faire, il est nécessaire d'alimenter en énergie électrique les tapis fixés sur les pales, via un équipement permettant de transférer cette énergie électrique d'une partie fixe dans le moteur, vers une partie tournante, l'hélice ou le rotor principal.

Classiquement, ce transfert tournant de l'énergie électrique est réalisé à l'aide d'un système « balais + collecteur ». Sur un turbopropulseur classique, le transfert est réalisé par contact entre le collecteur monté sur le capot arrière de l'hélice et constitué d'une ou plusieurs piste(s) en matériau conducteur, typiquement en cuivre, et les balais montés sur le réducteur du moteur et réalisés en un matériau conducteur venant frotter sur la ou les pistes en cuivre. Une variante de ce montage est illustrée par le brevet EP2730506 délivré à la société américaine Hamilton Sundstrand, avec un montage des équipements nécessaires au transfert tournant (balais et collecteur) à l'arrière du réducteur et non entre le réducteur et l'hélice comme réalisé classiquement.

Cette solution présente toutefois de nombreux inconvénients liés essentiellement aux frottements des balais sur les pistes du collecteur, source importante d'usure de ces balais. Cette usure rapide impose donc des opérations de maintenance régulières puis de remplacement, mais la méconnaissance de la durée de vie réelle des balais a pour conséquence de rendre peu fiable le système.

De plus, les balais sont exposés à des projections d'huile, des particules de poussière (dont des particules externes comme le sable, etc.) pouvant générer des arcs électriques au niveau du contact de nature à initier la combustion d'éléments inflammables constituant le panneau arrière de l'hélice (pouvant contenir du magnésium) et engendrer un départ feu pouvant entraîner jusqu'à la perte de la turbomachine.

Aussi, il est connu par le brevet US5,572,178 d'intégrer un transformateur tournant monophasé sur l'arbre moteur d'un aéronef, afin de réaliser un transfert tournant sans contact pour alimenter un système de dégivrage électrothermique ou électromécanique de faible ou moyenne puissance (de 300W à 500W par pale). Toutefois, une telle solution n'est pas adaptée dans le cas des systèmes purement électriques nécessitant des transferts de puissance électrique de l'ordre de 1kW par pale et il serait donc nécessaire de recourir à un transformateur triphasé qui se compose classiquement de trois transformateurs tournants monophasés disposés côte à côte avec toutefois les inconvénients suivants :
- le transformateur triphasé ainsi constitué serait encombrant en longueur, le rendant difficilement intégrable sur un arbre de la turbomachine sans en modifier les dimensions, ce qui aurait un impact global sur la longueur du moteur (impliquant une augmentation de la masse et des difficultés d'intégration sur l'avion),
- la masse d'un tel transformateur serait nécessairement élevée, et elle augmenterait avec le diamètre interne de celui-ci, et
- monté en extrémité d'arbre donc en porte-à-faux sur un arbre pouvant subir des efforts importants, l'ajout d'un tel transformateur complexifierait la dynamique de la ligne d'arbre nécessaire pour garantir un entrefer faible, typiquement inférieur à 1mm, sur toute la longueur de ce transformateur.

Un autre ensemble propulsif pour aéronef est connu de la demande de brevet EP 2 919 555 A1.

### Objet et résumé de l'invention

L'invention a donc pour but de proposer une intégration d'un transformateur tournant dans un ensemble propulsif pour aéronef qui permette un transfert sans contact d'une puissance électrique importante à destination d'un propulseur à pales entrainé par un moteur de l'ensemble propulsif, par exemple pour assurer le dégivrage des pales du propulseur, et ne nécessite pas ou peu de modifications de structure. Une dénomination commune de propulseur à pales est utilisée pour qualifier à la fois l'hélice d'un avion et le rotor principal d'un hélicoptère, ou encore un rotor principal d'un drone volant, l'arbre porte-hélice ou l'arbre du rotor principal étant qualifié de la même façon d'arbre porte-propulseur.

Ce but est atteint grâce à un ensemble propulsif pour aéronef, comportant un moteur et un arbre porte-propulseur entraîné en rotation par le moteur, ledit arbre porte-propulseur traversant un carter étanche contenant un fluide lubrifiant, l'ensemble propulsif comportant en outre un propulseur à pales accouplé au dit arbre porte-propulseur et comprenant des organes électriques consommateurs de puissance électrique, l'étanchéité entre ledit carter étanche et ledit arbre porte-propulseur étant assurée par un joint dynamique logé entre un support tournant de joint dynamique solidaire de manière angulaire avec ledit arbre porte-propulseur et une bride support de joint dynamique solidaire d'une partie d'extrémité dudit carter en regard dudit propulseur, ledit support tournant de joint dynamique étant solidarisé au dit arbre porte-propulseur en étant maintenu axialement en appui contre un palier de support dudit arbre porte-propulseur, l'ensemble propulsif étant caractérisé en ce que, pour délivrer de la puissance électrique auxdits organes électriques, il comprend un transformateur tournant mis en rotation par ledit arbre porte-propulseur et comportant d'une part un stator dont un boitier est solidarisé à ladite bride support de joint dynamique et d'autre part un rotor dont un boitier est solidarisé au dit arbre porte-propulseur.

Ainsi, en intégrant le transformateur directement au niveau de la bride support de joint dynamique en liaison avec l'arbre porte-propulseur, les modifications structurelles de la turbomachine comme les efforts supportés par le transformateur sont limités. Le transformateur présente avantageusement un entrefer réduit lui assurant une compacité suffisante pour cette intégration.

Avantageusement, ladite partie fixe de la turbomachine est une partie d'extrémité dudit réducteur opposée à ladite hélice.

De préférence, ledit boitier de stator est intégré à ladite bride support de joint dynamique pour former une seule et même pièce.

Avantageusement, ladite bride support de joint dynamique est solidarisée à ladite partie d'extrémité de carter soit par une pluralité de vis soit par un collier de serrage.

Selon un mode de réalisation, ledit boitier de rotor est intégré au dit support tournant de joint dynamique pour former une seule et même pièce et ledit boitier de rotor est disposé en porte-à-faux sur un épaulement dudit arbre porte-propulseur, de sorte qu'en ne reposant que sur une faible longueur de l'arbre porte-propulseur il n'en suit pas les mouvements de flexion. Ledit support tournant de joint dynamique est pincé entre ledit épaulement dudit arbre porte-propulseur et le palier de support dudit arbre porte-propulseur.

Selon un autre mode de réalisation, ledit boitier de rotor est solidarisé au dit arbre porte-propulseur par pincement entre un épaulement dudit arbre porte-propulseur et ledit support tournant de joint dynamique.

Avantageusement, lesdits organes électriques comportent chacune un ou plusieurs éléments de dégivrage électrique et ladite puissance électrique est délivrée audit propulseur à pales pour l'alimentation desdits éléments de dégivrage électrique.

L'invention trouve notamment application sur un turbopropulseur ou un turboréacteur de turbosoufflante d'avion, un turbomoteur d'hélicoptère ou un moteur électrique de drone volant.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1A est une perspective schématisant un premier exemple de turbomachine aéronautique permettant une mise en œuvre conforme à l'invention,
- la figure 1B est une vue schématique d'un second exemple de turbomachine aéronautique permettant une mise en œuvre conforme à l'invention,
- la figure 2 illustre de façon très schématique l'intégration d'un transformateur tournant à flux axial sur un arbre de la turbomachine de la figure 1A,
- la figure 3 illustre de façon très schématique une variante d'intégration d'un transformateur tournant à flux axial sur un arbre de la turbomachine de la figure 1A,
- la figure 4 montre un détail d'assemblage par collier du transformateur de la figure 2, et
- la figure 5 illustre de façon très schématique l'intégration d'un transformateur tournant à flux radial sur un arbre de la turbomachine de la figure 1A.

### Description détaillée de modes de réalisation

Le principe de l'invention repose sur une intégration particulière dans une boite de transmission ou un réducteur de turbomachine aéronautique d'un transformateur triphasé tournant à flux radial de type « en U » (nommé TFU dans la suite du document) ou à flux axial de type « en E » (nommé TFE dans la suite du document) tel que décrit par exemple dans les demandes WO2013/167827 à WO2014/167830 dont le contenu est incorporé par référence, pour le transfert de puissance électrique vers une hélice de turbomachine ou un rotor d'hélicoptère et permettant, pour une même puissance électrique, un gain de masse et d'encombrement par rapport à un transformateur triphasé classique.

Par turbomachine aéronautique, il convient de considérer aussi bien un turbopropulseur ou un turboréacteur d'avion, un turbomoteur d'hélicoptère ou une turbosoufflante d'aéronef préférentiellement à haut taux de dilution.

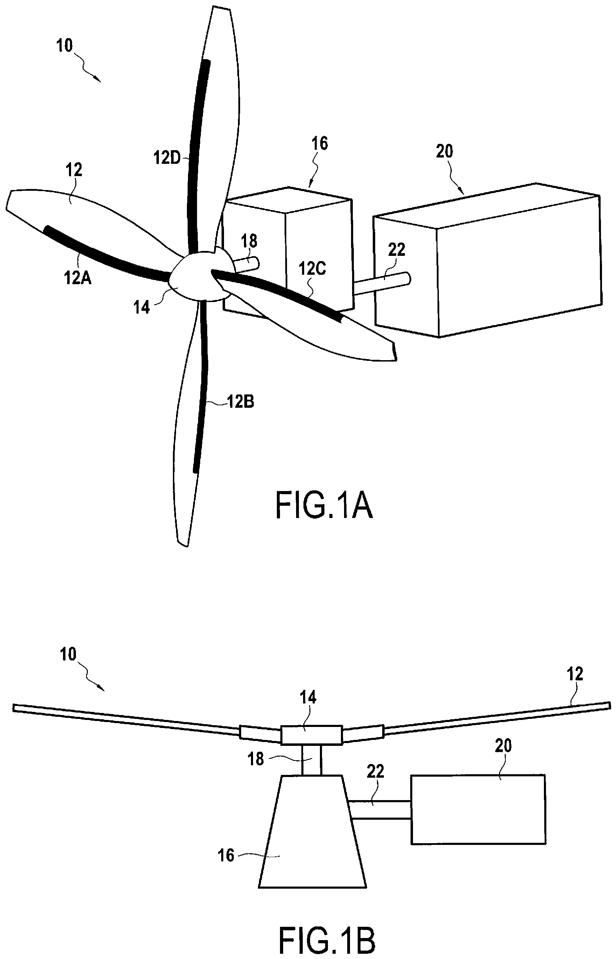

Comme le montre schématiquement la figure 1A relative à un turbopropulseur d'avion, une hélice 10 comportant une pluralité de pales 12 arrangées autour d'un moyeu 14 et comportant chacune un ou plusieurs éléments de dégivrage électrique 12A à 12D, est reliée à un réducteur 16 via un arbre porte-hélice 18. Le réducteur est relié à son tour à un moteur à turbine à gaz 20 de la turbomachine aéronautique via un arbre moteur 22. Le réducteur assure la conversion de vitesse entre l'hélice disposée à l'avant du réducteur et qui tourne à une vitesse déterminée et le moteur à turbine à gaz monté à l'arrière du réducteur et qui tourne à une vitesse beaucoup plus élevée.

On retrouve quasi les mêmes éléments portant les mêmes références dans la figure 1B relative à un turbomoteur d'hélicoptère. Un rotor principal d'hélicoptère 10 comportant une pluralité de pales 12 arrangées autour d'un corps central 14 est relié à une boite de transmission 16 via un arbre de rotor 18. La boite de transmission qui consiste en un réducteur à grand rapport de réduction est reliée à son tour à un moteur à turbine à gaz 20 de la turbomachine aéronautique via un arbre moteur 22. La boite de transmission 16 assure la conversion de vitesse entre le rotor qui tourne à une vitesse déterminée et le moteur à turbine à gaz qui tourne à une vitesse beaucoup plus élevée.

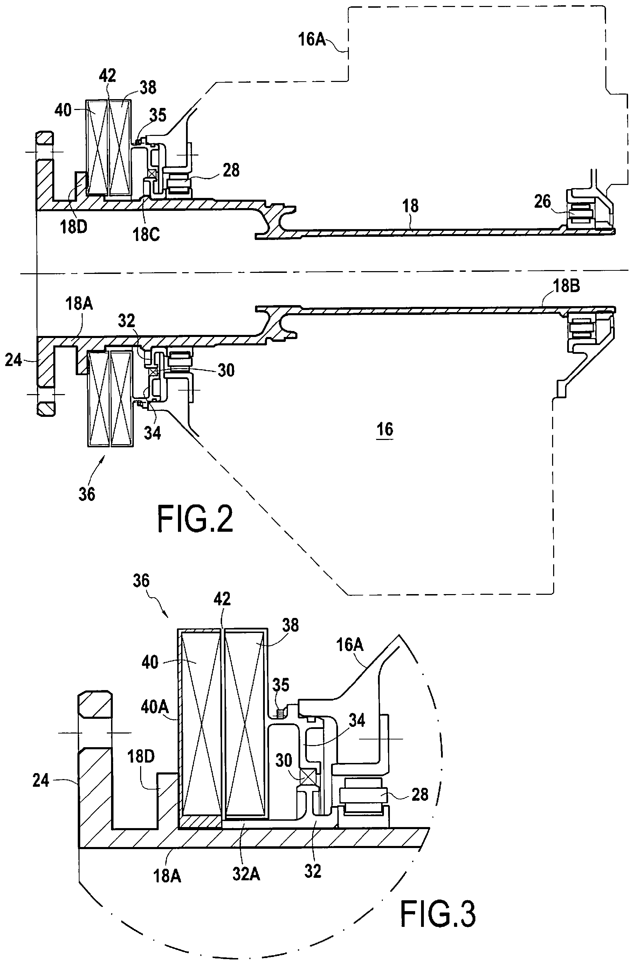

Sur la figure 2 qui se rapporte plus particulièrement à un turbopropulseur d'avion (mais sans que cet exemple ne soit limitatif), l'arbre porte-hélice 18 montré plus en détail (toutefois sans les différents câblages électriques de liaison aux éléments de dégivrage et à l'alimentation en énergie électrique qui n'ont pas été représentés pour ne pas surcharger le dessin) et comportant notamment à une extrémité de sa partie avant 18A une bride de fixation 24 à l'hélice 10, est supporté dans le réducteur 16 qu'il traverse par une paire de paliers 26, 28, par exemple des paliers à roulements de type rouleaux, ce réducteur étant enfermé dans un carter étanche 16A contenant un fluide lubrifiant. Un troisième palier (non représenté sur le dessin) de type à roulements à billes peut compléter la paire de paliers 26, 28 pour reprendre l'effort axial de l'hélice. L'arbre porte-hélice présente en général dans cette partie avant (sans que cette configuration ne soit considérée comme limitative) un diamètre supérieur au diamètre d'une partie arrière 18B. L'étanchéité dynamique entre le réducteur fixe 16 et l'arbre porte-hélice tournant 18 est assurée classiquement par un joint dynamique 30 logé entre un support tournant de joint dynamique 32 solidaire de manière angulaire avec l'arbre port-hélice 18 et une bride support de joint dynamique 34 solidaire du carter du réducteur 16A. Le support tournant de joint dynamique est solidarisé à l'arbre porte-hélice en étant maintenu axialement en appui contre le palier 28 de support de l'arbre porte-hélice.

Plus précisément, dans la réalisation représentée sur la figure 2, le support tournant de joint dynamique 32 est pincé entre un épaulement 18C de l'arbre porte-hélice et le palier 28, par exemple grâce à un dispositif d'appui (non représenté) prévu pour appuyer axialement sur le palier 28 en direction de l'épaulement 18C. Ce dispositif d'appui peut comprendre par exemple un écrou venant en appui contre le palier 28 et un palier à roulement à billes pouvant être prévu à cet endroit de l'arbre d'hélice. La bride support de joint dynamique est quant à elle fixée au carter du réducteur avantageusement par une pluralité de vis 35.

Selon un premier mode de réalisation de l'invention, pour délivrer la puissance électrique nécessaire à l'alimentation du ou des éléments de dégivrage électrique, il est proposé de placer le transformateur tournant à flux axial (TFE 36) sur cet arbre porte-hélice traversant le réducteur, en sortie de ce réducteur (c'est-à-dire à l'avant de l'arbre porte-hélice, côté hélice), entre la bride 24 de fixation à l'hélice et le carter 16A du réducteur. Cet emplacement est choisi de préférence à tout autre car il est présent sur la plupart des configurations actuelles de réducteur du fait que la longueur de l'arbre porte-hélice est classiquement contrainte par l'intégration à cet endroit du système « balais + collecteur » de l'art antérieur. Le transformateur 36 en venant s'intégrer dans cet espace disponible en lieu et place de ce système classique ne nécessite donc pas la libération d'un volume libre supplémentaire et, en fonction des dimensions du transformateur utilisé, il devient même possible de réduire la distance entre la bride de fixation à l'hélice et le carter du réducteur pour diminuer si nécessaire la masse du nouvel ensemble ainsi constitué.

Dans cette première configuration, le stator 38 du transformateur est solidaire du réducteur 16 et le rotor 40 est solidaire de l'arbre porte-hélice 18, un faible entrefer axial 42, typiquement inférieur à 1mm, étant ménagé entre stator et rotor. Plus précisément, le stator 38 est solidarisé à la bride support de joint dynamique 34 fixée au carter du réducteur par la pluralité de vis 35 et qui est modifiée pour servir également de support à un boîtier de ce stator et former ainsi avec celui-ci une seule et même pièce 34. Dans l'exemple illustré, le rotor 40 est par contre simplement monté dans un boitier 40A fretté sur l'arbre porte-hélice contre un épaulement 18D de cet arbre porte-hélice.

Cette fixation du rotor n'est bien entendu aucunement limitative et dans l'exemple de la figure 3, le boitier 40A du rotor 40 est solidarisé à l'arbre porte-hélice par pincement entre cet épaulement 18D et le support tournant de joint dynamique 32, lequel se prolonge alors axialement par une partie tubulaire 32A dont une extrémité vient en appui contre le boitier 40A.

Les avantages apportés par cette solution permettant l'intégration du transformateur à flux axial sur l'arbre porte-hélice au plus près du réducteur (et notamment du palier 28 support de l'arbre porte-hélice) sont notamment les suivants :
Un gain de place du fait d'une intégration au système d'étanchéité dynamique du réducteur,
Un porte-à-faux de l'arbre porte-hélice réduit et une diminution de l'impact sur la dynamique de la ligne de l'arbre porte-hélice,
Un gain de masse car la configuration limite le nombre de pièces intermédiaires nécessaires pour fixer le transformateur, et
Une limitation des variations d'entrefer facilitée par le montage en flux axial qui est en outre moins sensible aux effets des flexions de l'arbre porte-hélice.

En outre, le transformateur n'est plus un équipement monté sur le réducteur, mais devient une pièce à part entière de celui-ci, et donc assemblé en même temps que le réducteur.

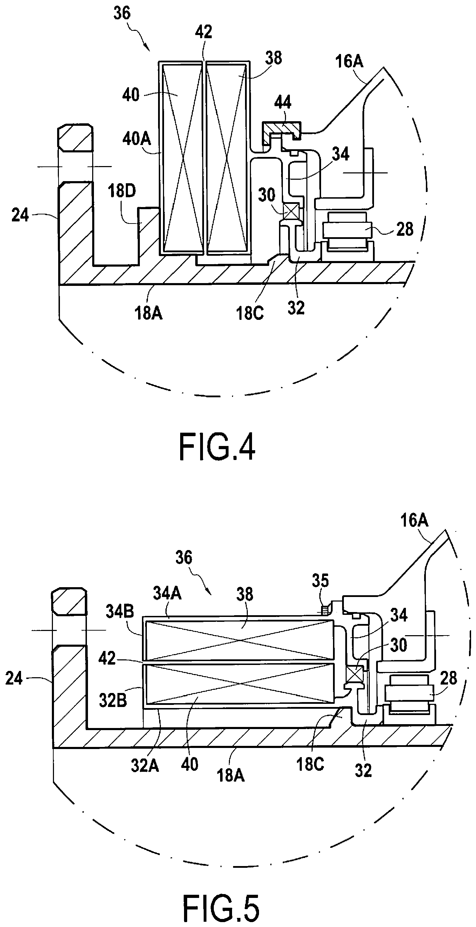

Comme le montre la variante de la figure 4, la bride support de joint dynamique 34 supportant le stator peut également être assemblée au carter par un autre moyen que la fixation par vis 35. Par exemple, une solution d'assemblage par collier 44 permet de gagner de l'encombrement et de rapprocher du palier 28 le stator ainsi que le rotor, ce qui limite leurs déflexions en fonctionnement.

La figure 5 illustre de façon schématique (les câblages électriques ayant pareillement été omis) l'intégration d'un transformateur tournant à flux radial TFU sur l'arbre porte-hélice 18 en sortie du réducteur.

De façon analogue à la réalisation précédente, la bride support de joint dynamique 34 est modifiée en étant prolongée par une paroi circonférentielle axiale 34A terminée par une paroi de retour radiale 34B pour former également le boitier du stator 38 du transformateur, l'ensemble constituant alors une seule et même pièce. Par contre, dans ce second mode de réalisation, le support tournant de joint dynamique 32 est prolongé à son tour par une paroi circonférentielle axiale 32A terminée par une paroi de retour radiale 32B pour former un boitier du rotor, l'ensemble constituant une seule et même pièce maintenue axialement par pincement entre l'épaulement 18C de l'arbre porte-hélice 18 et le palier 28 support de l'arbre porte-hélice 18. De la sorte, le rotor en porte-à-faux sur cet épaulement repose sur une faible longueur de l'arbre porte-hélice dans une zone qui se situe au plus près du roulement à rouleaux du palier 28 reprenant les efforts de l'arbre porte-hélice 18.

Les avantages apportés par cette configuration d'un TFU permettant l'intégration sur l'arbre porte-hélice 18 sont multiples et outre les avantages précités de gain de place, de masse et un porte-à-faux de l'arbre porte-hélice réduit, cette configuration à flux radial permet un découplage du rotor 40 du transformateur des mouvements de flexion d'hélice afin de limiter les variations d'entrefer. En effet, le rotor ne repose pas directement sur toute la longueur disponible de l'arbre porte-hélice et n'est donc pas «entrainé» par les mouvements de flexion de cet arbre.

Dans les modes de réalisation décrits précédemment, l'arbre porte-hélice 18 est formé d'un seul tenant. Il est néanmoins possible de prévoir un arbre porte-hélice réalisé en au moins deux parties, avec par exemple une partie extérieure dite « bride rapportée » comprenant la bride de fixation 24 à l'hélice, cette partie extérieure étant montée solidaire en rotation d'une partie intérieure qui porte le support tournant de joint dynamique 32 et le palier 28 de support de l'arbre. Un épaulement peut être prévu sur la partie intérieure de l'arbre pour former une butée contre laquelle la bride rapportée peut être serrée par un écrou, et cet écrou peut venir pincer le support tournant de joint dynamique entre la bride rapportée et l'épaulement. Ce mode de réalisation permet notamment un remplacement du transformateur tournant, en cas de défaut électrique, sans nécessiter de dépose complète du réducteur, mais uniquement en retirant l'hélice et la bride rapportée, facilitant ainsi les opérations de maintenance.

Avec l'invention, il est proposé une intégration sur l'arbre porte-hélice en sortie du réducteur permettant d'optimiser l'encombrement et la masse du transformateur TFU et TFE. On notera toutefois que si l'intégration précitée est de préférence basée sur des technologies de transformateurs dits « en U » ou « en E » tel que décrit dans les demandes WO2013/167827 à WO2014/167830, il est clair qu'elles sont aussi applicables pour tout type de transformateur à flux axial ou radial polyphasé.

Il convient aussi de noter que si la description qui précède a été effectuée essentiellement au regard d'un ensemble propulsif d'avion tel que représenté à la figure 1A, il est entendu que l'homme du métier n'aura aucune difficulté à mettre en œuvre l'invention dans l'ensemble propulsif d'hélicoptère illustré à la figure 1B et dans lequel le carter étanche de la boîte de transmission principale (comportant un réducteur apte à entrainer le rotor principal de l'hélicoptère) est analogue au carter étanche précité. De la même façon, la mise en oeuvre de l'invention au niveau de l'arbre du rotor principal de l'hélicoptère est analogue à celle décrite précédemment au niveau de l'arbre porte-hélice de l'avion.

De même, l'homme du métier pourra sans faire preuve d'activité inventive prendre pour carter étanche le carter étanche d'un moteur électrique de drone volant et pour arbre porte-propulseur l'arbre de sortie de ce moteur assurant un entraînement direct des hélices (son propulseur à pales) de ce drone volant.

On notera également que si la présente invention a été développée dans le cadre du transfert tournant électrique pour l'alimentation d'un système de dégivrage des pales d'hélice, elle est bien entendu aussi applicable à tous organes électriques consommateurs de puissance électrique et nécessitant donc un transfert tournant d'énergie électrique vers un propulseur à pales quelle que soit son utilisation. Ces organes électriques peuvent être ainsi, sans que cette liste soit exhaustive : un système d'actionnement du pas d'hélice, un système d'équilibrage d'hélice, un système de mesures sur la partie tournante par exemple.

## Revendications

1. Ensemble propulsif pour aéronef, comportant un moteur (20) et un arbre porte-propulseur (18) entraîné en rotation par le moteur, ledit arbre porte-propulseur traversant un carter étanche (16A) contenant un fluide lubrifiant, l'ensemble propulsif comportant en outre un propulseur (10) à pales (12) accouplé au dit arbre porte-propulseur et comprenant des organes électriques (12A - 12D) consommateurs de puissance électrique, l'étanchéité entre ledit carter étanche et ledit arbre porte-propulseur étant assurée par un joint dynamique (30) logé entre un support tournant de joint dynamique (32) solidaire de manière angulaire avec ledit arbre porte-propulseur et une bride support de joint dynamique (34) solidaire d'une partie d'extrémité dudit carter en regard dudit propulseur (10), ledit support tournant de joint dynamique étant solidarisé au dit arbre porte-propulseur en étant maintenu axialement en appui contre un palier (28) de support dudit arbre porte-propulseur, pour délivrer de la puissance électrique auxdits organes électriques, l'ensemble propulsif comprend un transformateur tournant (36) mis en rotation par ledit arbre porte-propulseur et comportant d'une part un stator (38) dont un boitier (34A, 34B) est solidarisé à ladite bride support de joint dynamique et d'autre part un rotor (40) dont un boitier (40A ; 32A, 32B) est solidarisé au dit arbre porte-propulseur.

2. Ensemble propulsif pour aéronef selon la revendication 1, **caractérisé en ce que** ledit boitier de stator est intégré à ladite bride support de joint dynamique pour former une seule et même pièce.

3. Ensemble propulsif pour aéronef selon la revendication 1 ou la revendication 2, **caractérisé en ce que** ladite bride support de joint dynamique est solidarisée à ladite partie d'extrémité de carter par une pluralité de vis (35).

4. Ensemble propulsif pour aéronef selon la revendication 1 ou la revendication 2, **caractérisé en ce que** ladite bride support de joint dynamique est solidarisée à ladite partie d'extrémité de carter par un collier de serrage (44).

5. Ensemble propulsif pour aéronef selon la revendication 1, **caractérisé en ce que** ledit boitier de rotor est intégré au dit support tournant de joint dynamique pour former une seule et même pièce.

6. Ensemble propulsif pour aéronef selon la revendication 5, **caractérisé en ce que** ledit boitier de rotor est disposé en porte-à-faux sur un épaulement (18C) dudit arbre porte-propulseur, de sorte qu'en ne reposant que sur une faible longueur de l'arbre porte-propulseur il n'en suit pas les mouvements de flexion.

7. Ensemble propulsif pour aéronef selon la revendication 6, **caractérisé en ce que** ledit support tournant de joint dynamique (32) est pincé entre ledit épaulement dudit arbre porte-propulseur et le palier (28) de support dudit arbre porte-propulseur.

8. Ensemble propulsif pour aéronef selon la revendication 1, **caractérisé en ce que** ledit boitier de rotor est solidarisé au dit arbre porte-propulseur par pincement entre un épaulement (18D) dudit arbre porte-propulseur et ledit support tournant de joint dynamique.

9. Ensemble propulsif pour aéronef selon l'une quelconque des revendications 1 à 8, **caractérisée en ce que** lesdits organes électriques comprennent un ou plusieurs éléments de dégivrage électrique (12A -12D) et ladite puissance électrique est délivrée audit propulseur à pales pour l'alimentation desdits éléments de dégivrage électrique.

10. Ensemble propulsif pour aéronef selon l'une quelconque des revendications 1 à 9, **caractérisé en ce que** ledit moteur consiste en un turbopropulseur ou un turboréacteur de turbosoufflante d'avion, un turbomoteur d'hélicoptère ou un moteur électrique de drone volant.

## Patentansprüche

1. Flugzeugantriebsanordnung, aufweisend einen Motor (20) und eine Antriebsträgerwelle (18), die von dem Motor rotatorisch angetrieben wird, wobei die Antriebsträgerwelle ein dichtes Gehäuse (16A) durchquert, das ein Schmierfluid enthält, wobei die Antriebsanordnung ferner einen Antrieb (10) mit Schaufeln (12) aufweist, der mit der Antriebsträgerwelle verbunden ist und elektrische Organe (12A - 12D) umfasst, die elektrische Leistung verbrauchen, wobei die Dichtigkeit zwischen dem dichten Gehäuse und der Antriebsträgerwelle von einer dynamischen Dichtung (30) sichergestellt ist, die zwischen einem drehenden Halter der dynamischen Dichtung (32), der mit der Antriebsträgerwelle winklig verbunden ist, und einem Trägerflansch der dynamischen Dichtung (34), der mit einem Endteil des Gehäuses gegenüber dem Antrieb (10) fest verbunden ist, untergebracht ist, wobei der drehende Halter der dynamischen Dichtung mit der Antriebsträgerwelle fest verbunden ist, indem er axial abgestützt auf einem Tägerlager (28) der Antriebsträgerwelle gehalten wird, um den elektrischen Organen elektrische Leistung bereitzustellen, wobei die Antriebsanordnung einen Drehtransformator (36) umfasst, der von der Antriebsträgerwelle in Rotation versetzt wird und zum einen einen Stator (38) aufweist, dessen Kasten (34A, 34B) mit dem Trägerflansch der dynamischen Dichtung fest verbunden ist, und zum anderen einen Rotor (40), dessen Kasten (40A; 32A, 32B) mit der Antriebsträgerwelle fest verbunden ist.

2. Flugzeugantriebsanordnung nach Anspruch 1, **dadurch gekennzeichnet, dass** der Statorkasten in den Trägerflansch der dynamischen Dichtung integriert ist, um ein und dasselbe Teil zu bilden.

3. Flugzeugantriebsanordnung nach Anspruch 1 oder Anspruch 2, **dadurch gekennzeichnet, dass** der Trägerflansch der dynamischen Dichtung mit dem Gehäuseendteil durch eine Vielzahl von Schrauben (35) verbunden ist.

4. Flugzeugantriebsanordnung nach Anspruch 1 oder Anspruch 2, **dadurch gekennzeichnet, dass** der Trägerflansch der dynamischen Dichtung mit dem Gehäuseendteil durch eine Schelle (44) fest verbunden ist.

5. Flugzeugantriebsanordnung nach Anspruch 1, **dadurch gekennzeichnet, dass** der Rotorkasten in dem drehenden Halter der dynamischen Dichtung integriert ist, um ein und dasselbe Teil zu bilden.

6. Flugzeugantriebsanordnung nach Anspruch 5, **dadurch gekennzeichnet, dass** der Rotorkasten überhängend auf einem Absatz (18C) der Antriebsträgerwelle angeordnet ist, so dass er, indem er nur auf einer geringen Länge der Antriebsträgerwelle aufliegt, deren Flexionsbewegungen nicht folgt.

7. Flugzeugantriebsanordnung nach Anspruch 6, **dadurch gekennzeichnet, dass** der drehende Halter der dynamischen Dichtung (32) zwischen dem Absatz der Antriebsträgerwelle und dem Trägerlager (28) der Antriebsträgerwelle eingeklemmt ist.

8. Flugzeugantriebsanordnung nach Anspruch 1, **dadurch gekennzeichnet, dass** der Rotorkasten mit der Antriebsträgerwelle durch Einklemmen zwischen einem Absatz (18D) der Antriebsträgerwelle und dem drehenden Halter der dynamischen Dichtung fest verbunden ist.

9. Flugzeugantriebsanordnung nach einem der Ansprüche 1 bis 8, **dadurch gekennzeichnet, dass** die elektrischen Organe ein oder mehrere Elemente zur elektrischen Enteisung (12A -12D) umfassen und dass die elektrische Leistung dem Antrieb mit Schaufeln zur Versorgung der Elemente zur elektrischen Enteisung bereitgestellt wird.

10. Flugzeugantriebsanordnung nach einem der Ansprüche 1 bis 9, **dadurch gekennzeichnet, dass** der Motor aus einem Turboantrieb oder einem Flugzeug-Turbogebläse-Turboreaktor, einem Helikopter-Turbomotor oder einem Elektromotor einer fliegenden Drohne besteht.

## Claims

1. Propulsion unit for an aircraft, including an engine (20) and a propeller shaft (18) driven in rotation by the engine, said propeller shaft passing through a sealed case (16A) containing a lubricating fluid, the propulsion unit further including a propeller (10) with airfoils (12) which is coupled to said propeller shaft and comprising electrical members (12A -12D) that are electrical power consumers, the sealing between said sealed case and said propeller shaft being ensured by a dynamic seal (30) housed between a rotating dynamic seal support (32) angularly secured to said propeller shaft and a dynamic seal support flange (34) secured to an end portion of said case facing said propeller(10), said rotating dynamic seal support being secured to said propeller shaft while being axially held in abutment against a bearing (28) for supporting said propeller shaft, in order to deliver electrical power to said electrical members, the propulsion unit comprising a rotating transformer (36) rotated by said propeller shaft and including on the one hand a stator (38), a casing of which (34A, 34B) is secured to said dynamic seal support flange and on the other hand a rotor (40), a casing of which (40A; 32A, 32B) is secured to said propeller shaft.

2. Propulsion unit for an aircraft according to claim 1, **characterized in that** said stator casing is integrated into said dynamic seal support flange to form one and the same part.

3. Propulsion unit for an aircraft according to claim 1 or claim 2, **characterized in that** said dynamic seal support flange is secured to said case end portion by a plurality of screws (35).

4. Propulsion unit for an aircraft according to claim 1 or claim 2, **characterized in that** said dynamic seal support flange is secured to said case end portion by a tightening collar (44).

5. Propulsion unit for an aircraft according to claim 1, **characterized in that** said rotor casing is integrated into said rotating dynamic seal support to form one and the same part.

6. Propulsion unit for an aircraft according to claim 5, **characterized in that** said rotor casing is disposed in a cantilevered manner on a shoulder (18C) of said propeller shaft, so that by only resting on a small length of the propeller shaft, it does not follow its bending movements.

7. Propulsion unit for an aircraft according to claim 6, **characterized in that** said rotating dynamic seal support (32) is clamped between said shoulder of said propeller shaft and the bearing (28) for supporting said propeller shaft.

8. Propulsion unit for an aircraft according to claim 1, **characterized in that** said rotor casing is secured to said propeller shaft by clamping between a shoulder (18D) of said propeller shaft and said rotating dynamic seal support.

9. Propulsion unit for an aircraft according to any one of claims 1 to 8, **characterized in that** said electrical members comprise one or several electrical de-icing element(s) (12A -12D) and said electrical power is delivered to said propeller with airfoils for supplying said electrical de-icing elements.

10. Propulsion unit for an aircraft according to any one of claims 1 to 9, **characterized in that** said engine consists of a turboprop or an aircraft turbofan turbojet engine, a helicopter turboshaft engine or a flying drone electric motor.
